Europäisches Patentamt

European Patent Office

Office européen des brevets

(19)

(11) **EP 1 432 135 B1**

(12) **FASCICULE DE BREVET EUROPEEN**

(45) Date de publication et mention
de la délivrance du brevet:
**19.10.2005 Bulletin 2005/42**

(51) Int Cl.⁷: **H04B 1/713**

(21) Numéro de dépôt: **03104214.6**

(22) Date de dépôt: **14.11.2003**

(54) **Système et procédé de détection de présence et de synchronisation d'un signal pour un système à sauts de fréquence fonctionnant en environnement perturbé**

Verfahren und Vorrichtung zur Erkennung der Anwesenheit und der Synchronisation eines Signals, welches für ein Frequenzsprungssystem, das in einer gestörten Umgebung funktioniert, bestimmt ist

System and method for presence and synchronisation detection of a signal for a frequency hopping system working in a perturbed environment

(84) Etats contractants désignés:
**AT BE BG CH CY CZ DE DK EE ES FI FR GB GR HU IE IT LI LU MC NL PT RO SE SI SK TR**

(30) Priorité: **15.11.2002 FR 0214344**

(43) Date de publication de la demande:
**23.06.2004 Bulletin 2004/26**

(73) Titulaire: **Thales**
**92200 Neuilly Sur Seine (FR)**

(72) Inventeur: **Laurent, Pierre André**
**94117 Arcueil (FR)**

(74) Mandataire: **Dudouit, Isabelle**
**THALES Intellectual Property,**
**31-33 avenue Aristide Briand**
**94117 Arcueil Cedex (FR)**

(56) Documents cités:
**JP-A- 58 103 248          US-A- 5 625 641**

• **MILLER L E ET AL: "ANALYSIS OF AN ANTIJAM FH ACQUISITION SCHEME" IEEE TRANSACTIONS ON COMMUNICATIONS, IEEE INC. NEW YORK, US, vol. 40, no. 1, 1992, pages 160-170, XP000274961 ISSN: 0090-6778**

EP 1 432 135 B1

## Description

L'invention concerne un système et un procédé de détection de présence et de synchronisation d'un signal notamment pour un système à sauts de fréquence fonctionnant dans un environnement perturbé.

L'invention s'applique notamment aux systèmes à sauts de fréquence qui fonctionnent à des rapports signal/ bruit très faibles (typiquement ceux qui emploient les satellites artificiels à titre de relais) et, pour ces systèmes, à la fonction d'acquisition qui consiste, pour un participant entrant dans le réseau - donc non synchronisé - à détecter la présence de signaux connus émis à des instants et des fréquences connus.

Les systèmes de télécommunication protégés actuels mettent en oeuvre un procédé d'étalement de spectre qui consiste à utiliser pour la transmission une bande d'émission très largement supérieure à celle qui serait strictement nécessaire pour transmettre les données utiles.

Deux systèmes principaux existent :

- L'étalement de spectre par élargissement de la bande généralement obtenu en sur-modulant le signal d'origine par une séquence pseudo aléatoire synchrone avec les données et ayant un débit voisin de la largeur totale de bande occupée,
- L'étalement de spectre par sauts de fréquence (FH - frequency hopping ou EVF Evasion de Fréquence) qui consiste à émettre le signal par « paliers » de durée fixe, et en changeant de fréquence de manière pseudo aléatoire dans toute la bande occupée.

Dans la présente description le terme « pseudo aléatoire » signifie « aléatoire pour un intrus », et « parfaitement connu » pour un participant au système qui dispose du dispositif de génération d'aléas ad hoc, ainsi qu'une « clef » et de « l'heure » commune à tous les participants.

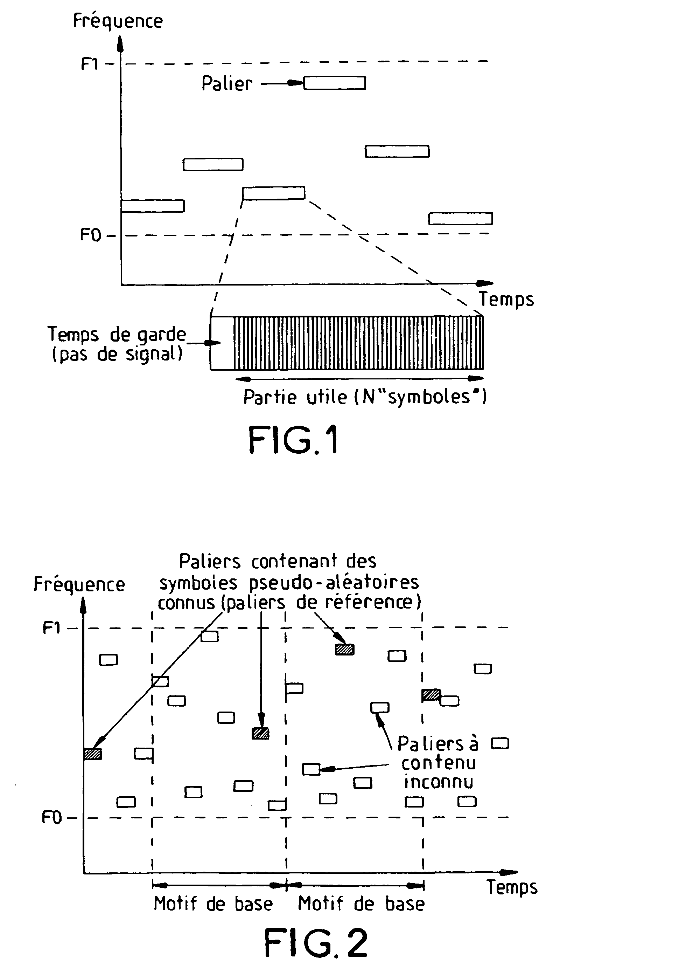

La figure 1 représente le principe d'un système à sauts de fréquence où la bande occupée est limitée par deux fréquences extrêmes F1 et F0 devant fonctionner à des rapports signaux/bruits très faibles (typiquement ceux qui emploient des satellites artificiels à titre de relais) et pour ces systèmes, à la fonction d'acquisition qui consiste, pour un participant entrant dans le réseau - donc non synchronisé - à détecter la présence de signaux connus émis à des instants et des fréquences connus.

Chaque palier comporte N éléments porteurs ou non d'information appelés symboles, précédés (ou suivis, peu importe) d'un temps de garde destiné à la fois à minimiser les interférences entre utilisateurs approximativement synchronisés et à laisser au récepteur le temps de se "stabiliser" à chaque nouvelle fréquence (contrôle de gain, temps de positionnement du synthétiseur de fréquences, traînage des filtres, ...).

Afin de pouvoir effectuer la synchronisation initiale, comme il a été dit plus haut, des paliers connus (i.e. dont les N symboles sont connus en totalité ou en partie) sont émis suivant une loi connue, tandis que la majorité des autres ne comportent (quasiment) que des symboles inconnus (information utile), comme représenté sur la figure 2.

On a supposé ici - pour simplifier l'exposé - que le temps était divisé en motifs de base de durée constante, chaque motif ne comportant qu'un palier de référence disposé à une position connue à l'avance.

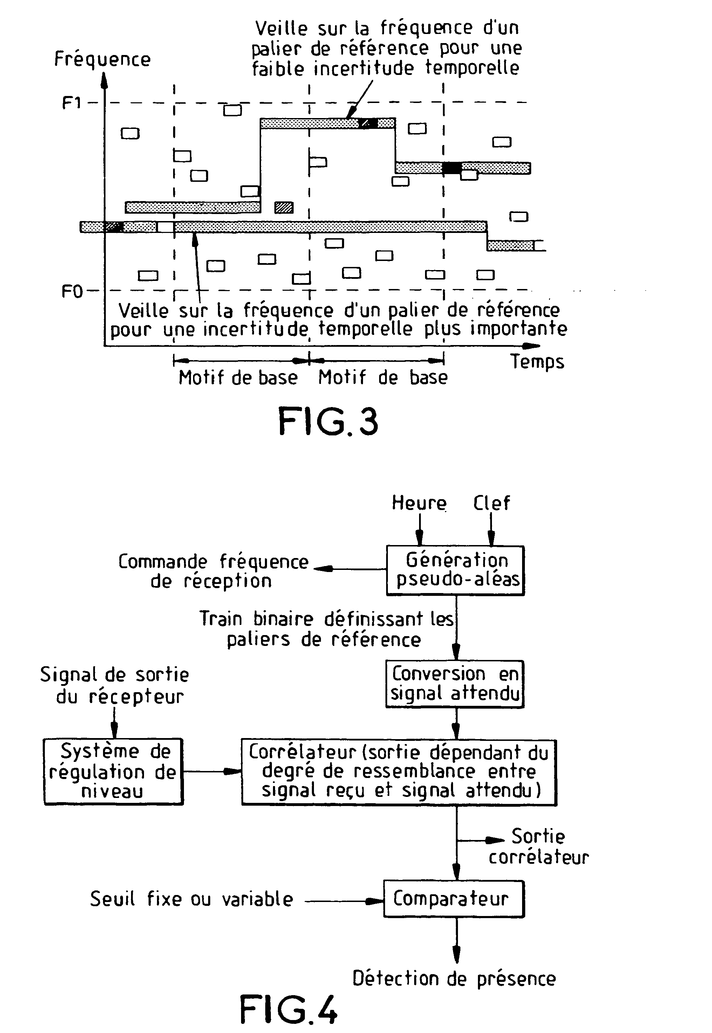

La figure 3 représente l'action du récepteur pendant la phase de recherche, c'est-à-dire lorsqu'il ne connaît pas encore le "temps de référence" du système auquel il veut avoir accès.

Deux situations sont représentées sur cette figure, correspondant respectivement aux deux cas suivants :

**1)** le récepteur dispose déjà d'une excellente estimation de l'heure du système (bandes grisées en haut): il se contente alors de veiller pendant une durée égale à un motif de base sur les fréquences où se trouvent les paliers de référence. Ainsi, si les conditions s'y prêtent, il finira tôt ou tard par détecter à la fois la présence et la position précise des dits paliers, dont il déduira le recalage temporel qu'il doit effectuer.

Si, au bout d'un certain temps, il n'a rien détecté, il avancera ou retardera son horloge d'une quantité déduite de la durée du motif de base, et effectuera une autre tentative de détection.

**2)** le récepteur ne dispose que d'une estimation assez imprécise de l'heure du système (bandes grisées du bas): il effectuera alors sa veille sur une durée multiple de la durée du motif de base, le facteur multiplicatif étant d'autant plus grand que son incertitude temporelle est plus élevée. La fréquence de veille utilisée à chaque fois sera logiquement celle du palier de référence qui devrait être, en principe, dans le motif de base situé au milieu de la durée de veille. Pour le reste, on procède de la même façon que dans le cas 1.

Lorsque le rapport signal/bruit est suffisant ou la probabilité de brouillage pas trop élevée le récepteur utilise un système de détection de présence tel que décrit sur la figure 4.

Un générateur de pseudo aléas délivre, en fonction de l'heure locale du récepteur le numéro de la fréquence de veille à utiliser ainsi qu'un train binaire à partir duquel on reconstitue la partie connue du signal attendu sur le palier de référence que l'on espère détecter, la partie inconnue étant mise à zéro.

Après une forme quelconque de régulation de niveau dépendant des caractéristiques du système et/ou de la structure choisie pour le récepteur, le signal reçu est comparé au signal attendu dans un dispositif appelé "corrélateur" (équivalent à un filtre "adapté" aux signaux de référence) et dont la sortie est maximale lorsque:

- le signal reçu comporte bien les bons symboles de référence aux positions attendues,
- le signal reçu est parfaitement "calé" dans le corrélateur, i.e. chaque symbole de référence reçu est "en face" du symbole de référence attendu.

En effet, si S est le signal reçu et R la référence, la sortie du corrélateur à l'instant t est donnée par:

$$\mathrm{Corr}(t) = \sum_n S_{t+nT}\, R_n^*$$

où T est l'intervalle entre deux symboles de référence.
Si l'on ignore les échantillons qui ne sont pas des références, le signal reçu peut se mettre sous la forme:

$$S_{t_0+kT} = GR_k + B_k$$

où G est un gain complexe et B du bruit complexe.
La sortie du corrélateur à l'instant to est alors donnée par:

$$\mathrm{Corr}(t_0) = \sum_n \left( GR_n^* + B_n \right) R_n^*$$

soit encore:

$$\mathrm{Corr}(t_0) = G \sum_n |R_n|^2 + \sum_n B_k\, R_n^*$$

c'est-à-dire G fois la somme des carrés des modules des symboles de référence additionnée d'un bruit aléatoire.
On montre que, statistiquement, Corr(to) est le maximum de la sortie du corrélateur.
Accessoirement, on montre aussi que si le décalage en fréquence du signal reçu par rapport à la fréquence nominale est un peu trop élevé, le niveau de corrélation décroît rapidement et rend la détection impossible.
Une solution simple consiste alors à considérer non pas le signal directement reçu, mais le signal après une démodulation différentielle, de la forme

$$S_t^d = S_t\, S_{t-T}^*$$

la corrélation se faisant en remplaçant les références originales par des références "différentielles", à savoir:

$$R_n^d = R_n\, R_{n-1}^*$$

Ainsi, si le décalage en fréquence du signal est df, on montre facilement que la sortie du démodulateur différentiel devient :

$$S_t^{'d} = S_t\, S_{t-T}^* = S_t\, S_{t-T}^*\, e^{-j\,2\,\pi\,df\,T} = e^{-j\,2\,\pi\,df\,T}\, S_t^d$$

ce qui revient à une simple rotation de phase ne dépendant que du décalage en fréquence.
Un seuil fixe ou ajustable est mis sur la sortie du corrélateur. Si ce seuil est dépassé, le récepteur déclare qu'il a "acquis" la référence et note l'heure du dépassement dont il déduira le recalage temporel à effectuer.

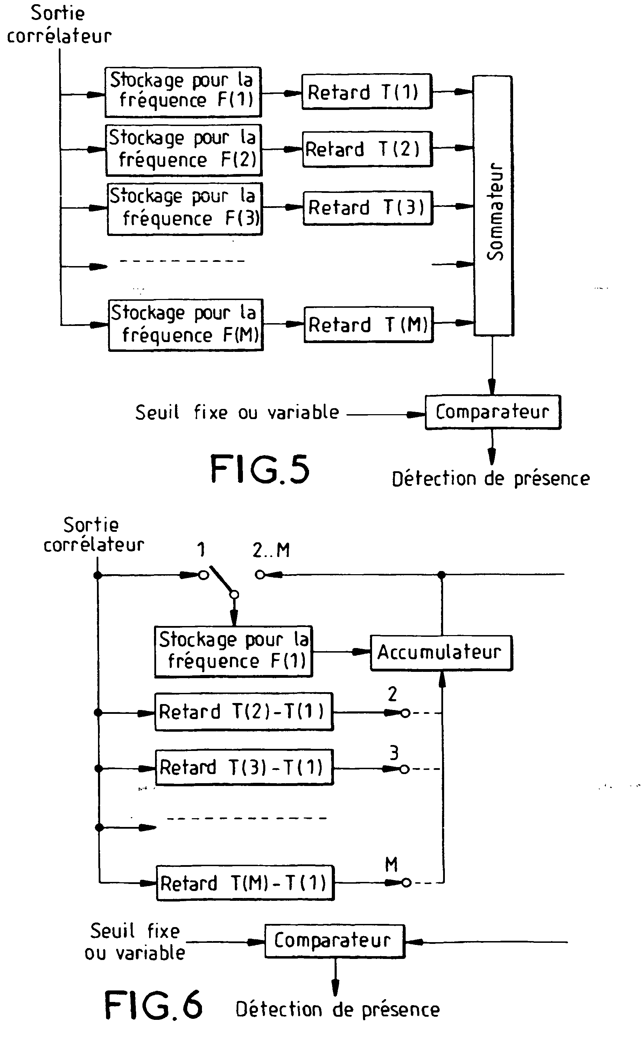

La figure 5 schématise un exemple de réalisation selon l'art antérieurs, tel que décrit par exemple dans le brevet US-A-5 625 641.

Le récepteur tente de recombiner les sorties du corrélateur récoltées pendant toute (ou presque) la durée de la veille sur les fréquences F(1), F(2), ... , F(M). Noter qu'il s'agit des sorties brutes du corrélateur, et que le seuil de détection mentionné plus haut n'est pas utilisé.

Sachant que, sur chacune de ces fréquences, et si le décalage temporel du récepteur n'est pas trop élevé, le palier de référence doit arriver, à un retard constant inconnu près, aux instants T(1), T(2), ..., T(M), le récepteur procède donc après la veille sur la dernière fréquence (M) de la façon suivante :

- il effectue une sommation point à point des sorties des M mémoires, chacune retardée de la quantité adéquate (les lignes à retard ne sont pas "physiquement" indispensables: elles peuvent être remplacées par des décalages appropriés dans les adresses de lecture en mémoire),
- il réalise une comparaison de toutes les sommes obtenues à un seuil fixe ou variable pour détecter la présence du signal, ainsi que son décalage temporel.

Ce mode de réalisation est fort coûteux en termes de mémoire, surtout si le produit de la cadence d'échantillonnage (proportionnelle à la vitesse de modulation, de la durée de veille (proportionnelle à l'incertitude temporelle) et du nombre de fréquences à veiller (d'autant plus important que les conditions de réception sont plus sévères) est important (plusieurs dizaines ou centaines de milliers).

Qui plus est, pour de forts décalages Doppler, on est obligé, même en adoptant en entrée un schéma de démodulation différentielle comme évoqué plus haut, d'utiliser plusieurs dispositifs identiques à celui-ci, chacun correspondant à une plage de décalages en fréquence donnée ("case Doppler"), l'ensemble des dispositifs couvrant toute la plage des décalages Doppler auxquels le système doit faire face.

La figure 6 représente une variante du système décrit à la figure 5, nécessitant M fois moins de mémoire, dans laquelle un traitement est réalisé en continu sur chaque fréquence de veille :

- sur la première fréquence de veille, on se contente de stocker directement le signal issu du corrélateur;
- sur les fréquences suivantes, on additionne la sortie du corrélateur retardée de la quantité adéquate aux corrélations déjà mémorisées;
- sur la dernière fréquence, la sortie de l'accumulateur est comparée à un seuil pour la détection de présence.

Comme certaines des différences de retards T(m) - T(1) (avec m = 2...M) peuvent être négatives, et si les paliers de référence peuvent être situés n'importe où dans le motif de base, la mémoire de stockage des corrélations sur la fréquence F1 doit être élargie pour contenir tous les échantillons correspondant à un motif de base, ou bien, symétriquement, si la taille de cette mémoire n'est pas modifiée, la plage d'incertitude temporelle dans laquelle on pourra détecter "à coup sûr" les M paliers de référence est réduite de la durée d'un motif de base.

Toutefois ce mode de réalisation n'évite pas la nécessité éventuelle de couvrir plusieurs cases Doppler donc, de réaliser le système à plusieurs exemplaires, chacun étant affecté à une case Doppler.

Le système et le procédé selon l'invention reposent sur une nouvelle approche du traitement des signaux.

Il s'applique notamment pour des systèmes où les conditions de réception sont particulièrement défavorables (faible rapport signal/bruit, très fort décalage Doppler) où l'acquisition par détection d'un palier de référence unique est peu probable et où il faut donc détecter simultanément plusieurs paliers pour obtenir le niveau de performances requis.

L'invention concerne un procédé de détection et de synchronisation d'un signal dans un système à sauts de fréquence. Il est caractérisé en ce qu'il comporte au moins les étapes suivantes :

- pour chaque fréquence F(1)...F(M), sélectionner les K échantillons correspondant aux plus grandes valeurs du signal, repérés chacun par une amplitude et une position corrigée d'un retard connu (T(1)...T(M)),
- combiner pour une position donnée les M plus grandes valeurs sélectionnées parmi K sur chaque fréquence ayant la dite position, et conserver la plus grande valeur combinée et la position correspondante,
- comparer la plus grande valeur combinée à une valeur seuil, si elle est supérieure à cette valeur seuil, alors décréter la détection du signal.

Le procédé peut comporter une étape de limitation du niveau d'amplitude du signal reçu S, comportant les étapes suivantes :

- corréler le signal reçu avec un signal de référence R,
- pour chaque fréquence F(1)...F(M), mémoriser les K plus grandes valeurs du signal et leur position corrigée d'un retard connu T(1)...T(M),

- sommer pour une position temporelle donnée les K plus grandes valeurs sélectionnées ayant cette position et conserver la somme la plus grande,
- comparer cette plus grande somme à une valeur seuil, si elle est supérieure à cette valeur seuil, alors décréter la détection du signal.

L'invention concerne aussi un dispositif de détection et de synchronisation d'un signal dans un système à sauts de fréquence caractérisé en ce qu'il comporte au moins les éléments suivants :

- plusieurs dispositifs de mémorisation 6i0, où i est l'indice de la fréquence concernée, les dispositifs étant adaptés à mémoriser les K plus grandes valeurs pour une fréquence donnée ainsi que leur position,
- un dispositif de combinaison permettant de combiner, position par position, les K plus grandes valeurs pour toutes les valeurs de fréquence et de conserver la plus grande valeur,
- un comparateur recevant d'une part la valeur d'un seuil à respecter et d'autre part la plus grande valeur.

L'objet de la présente invention présente par exemple les avantages suivants :

- une structure de système d'acquisition nécessitant le moins de puissance de calcul et le moins de mémoire possible, au prix d'une dégradation des performances aussi faible que possible par rapport au dispositif théorique optimal,
- selon une variante de réalisation, le système de régulation d'entrée est incorporé au dispositif, sachant que, dans les applications visées (de plus en plus dans l'avenir), la partie amont du récepteur est (au moins partiellement) réalisée sous forme numérique et que le signal d'entrée n'est que grossièrement régulé, par exemple juste pour éviter des saturations dans les étages intermédiaires,
- un système de régulation le plus simple et le plus efficace possible.

D'autres caractéristiques et avantages de la présente invention apparaîtront mieux à la lecture de la description donnée à titre illustratif et nullement limitatif annexé des figures qui représentent :

- Les figures 1 à 4 des schémas des principes d'émission et de synchronisation selon l'art antérieur,
- Les figures 5 et 6 deux exemples d'architecture de système selon l'art antérieur,
- La figure 7 un exemple d'architecture d'un système selon l'invention,
- Les figures 8 à 16 des exemples détaillés des différents éléments constituant le système de la figure 7.

Afin de mieux faire comprendre le principe mis en oeuvre dans la présente invention, la description qui suit donnée à titre illustratif et nullement limitatif concerne un système travaillant dans des conditions de réception particulièrement défavorables (faible rapport signal/bruit, très fort décalage Doppler), où l'acquisition par détection d'un palier de référence unique est hautement improbable dans les pires conditions d'exploitation et où il faut donc détecter simultanément plusieurs paliers pour obtenir le niveau de performances requis.

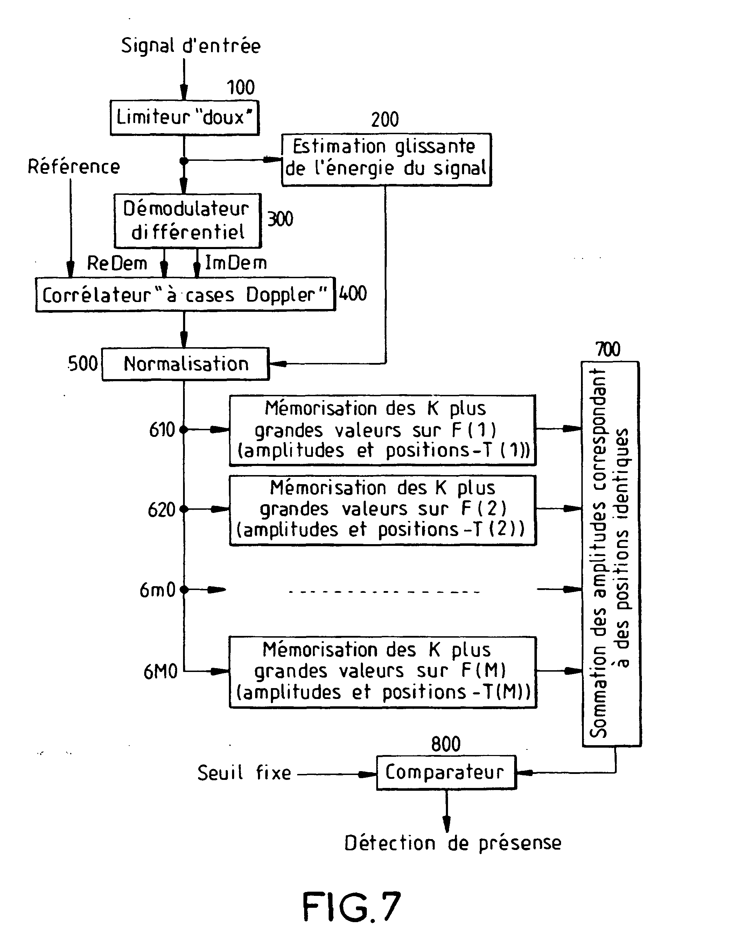

La figure 7 représente un exemple d'architecture d'un système permettant la synchronisation initiale d'un signal pour un rapport S/B faible et/ou en présence de brouilleurs, avec un fort décalage en fréquence inconnu.

Globalement le système comporte par exemple un dispositif 100, ou limiteur doux adapté à contrôler le niveau du signal S reçu par un récepteur du système, un dispositif 200 d'estimation de l'énergie du signal, un démodulateur différentiel 300 recevant le signal et générant un signal différentiel à un corrélateur à « cases Doppler » 400 qui reçoit aussi un signal de référence R, un dispositif de normalisation 500 du signal Sc issu du corrélateur en fonction de l'énergie estimée, plusieurs dispositifs de mémorisation 6i0, où i est l'indice de la fréquence concernée, un sommateur 700 et un comparateur 800 recevant d'une part la valeur d'un seuil à respecter et d'autre part le signal issu du sommateur. Ces différents éléments sont détaillés plus loin dans la description.

Les différents éléments du système fonctionnent de la manière décrite ci-après :

Le signal d'entrée S qui peut avoir une forte dynamique traverse d'abord le limiteur "doux" 100 dont l'effet est équivalent à un contrôle automatique de gain (CAG) ultrarapide qui préserve la linéarité de la réception.

En cela, il est préféré à un limiteur "dur" dont l'effet (bénéfique) est de donner au signal complexe de sortie un module constant mais qui a l'inconvénient, pour des rapports S/B inférieurs à l'unité (ce qui est le cas ici) de dégrader légèrement le rapport S/B de sortie (une fraction de dB de trop ... ).

La sortie du limiteur doux fait l'objet par exemple d'une estimation permanente et glissante de l'énergie du signal qui sera contenu dans le corrélateur grâce au dispositif 200.

Compte tenu de l'importance des décalages Doppler considérés, un démodulateur différentiel 300 utilise les échantillons du signal de sortie du limiteur doux pour générer le signal différentiel, représenté par ses deux composantes ReDem (partie réelle) et ImDem (partie imaginaire).

La sortie du démodulateur différentiel représente l'entrée du corrélateur "à cases Doppler" 400, corrélateur conçu pour travailler avec un signal de référence réel (généralement, série de +1 et -1).

La sortie du corrélateur est renormalisée par le système 500 en fonction de l'énergie du signal présent dans le corrélateur et calculée en permanence par le dispositif 200 déjà évoqué.

Pour chacune des fréquences de veille F(1)...F(M), le procédé garde en mémoire uniquement les K plus grandes valeurs de sortie, valeurs où le pic de corrélation est le plus susceptible d'apparaître, ainsi que leurs positions $\ell$ corrigées de la position théorique du palier de référence T(1)..T(M) dans les dispositifs de mémorisation numérotés 610, 620, ... , 6M0.

A la fin de la phase d'acquisition, le système 700 se charge de faire la somme des amplitudes stockées dont les positions (corrigées) $\ell$ sont identiques et mémorise la valeur de la plus grande somme et la position correspondante.

Finalement, le comparateur 800 compare à un seuil fixe la plus grande somme et décide de la présence du signal si celle-ci a dépassé le seuil.

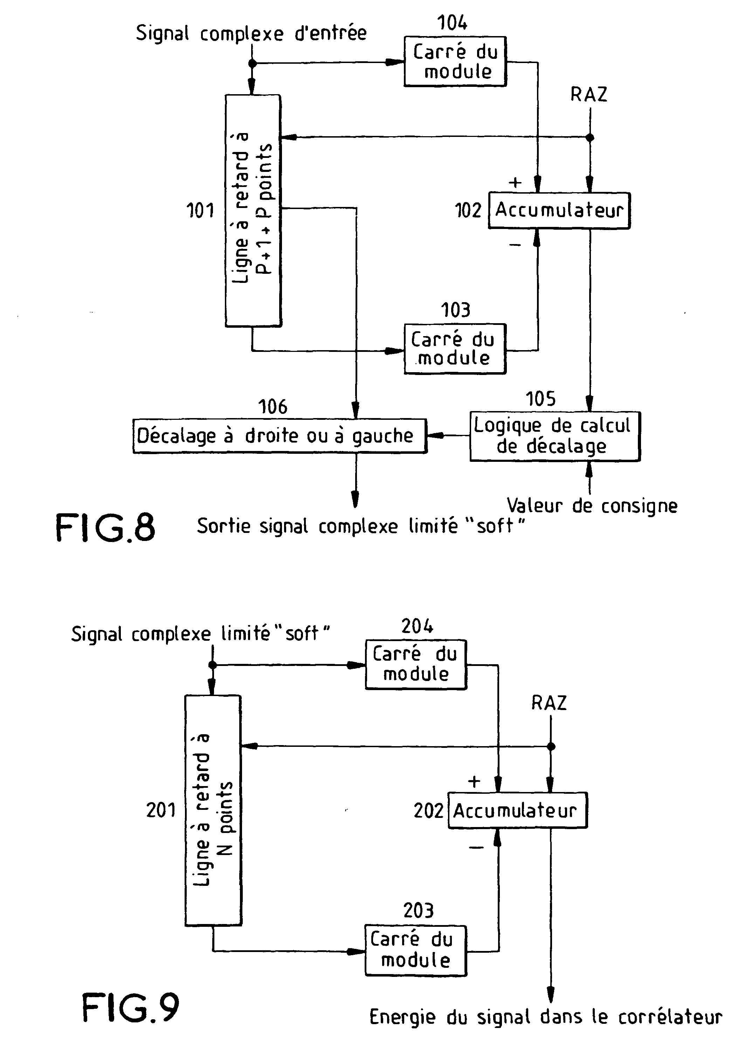

La figure 8 représente un exemple détaillé de réalisation du dispositif 100 dénommé « limiteur doux ». L'idée est de conserver l'énergie moyenne dans une plage de valeurs [Emin, Emax] donnée.

Son principe est d'abord d'évaluer l'énergie du signal complexe reçu par le récepteur contenu dans une ligne à retard 101 correspondant à une fenêtre de +/- P échantillons de part et d'autre de l'échantillon central et incluant l'échantillon courant. Ceci se fait grâce à un accumulateur 102 auquel on additionne le carré du module (104) de l'échantillon du signal le plus récent et on soustrait celui de l'échantillon le plus ancien (103). La sortie de l'accumulateur 102 est toujours exacte, grâce à la remise à zéro initiale de l'accumulateur et de la ligne à retard et au fait que l'on travaille sur des nombres entiers.

La sortie de l'accumulateur est ensuite fournie à une logique de calcul de décalage 105 qui applique au décaleur 106 un décalage tel que la sortie de l'accumulateur soit la plus proche possible d'une valeur de consigne donnée. Cette valeur dépend de la mise en oeuvre matérielle envisagée.

Le décaleur 106 fournit en sortie un signal complexe limité de façon douce ou, si l'on préfère, dont le niveau est régulé par un CAG "quasi-instantané".

Noter qu'en présence d'un signal de niveau constant en entrée, le niveau (constant) de sortie peut varier d'un facteur 2 selon les valeurs prises par le niveau d'entrée.

Afin de limiter le niveau de signal, le procédé considère par exemple une tranche ou plage de signal qui représente statistiquement une valeur d'énergie représentative de l'énergie du signal reçu par le récepteur.

- Soit Et la valeur d'énergie du signal pour un instant t donné,
- Soit G un gain à appliquer à Et,
- Soit g un gain à appliquer sur l'échantillon à traiter,

**Si** le produit G Et est supérieur ou égal à Emax,

Alors diviser le gain G par $n^2$, et le gain g par n,

**Sinon**

**Si** le produit G Et est inférieur ou égal à Emin,

Alors multiplier le gain G par $n^2$, et le gain g par n

**Sinon**

la valeur Et est comprise entre Emin et Emax, et il n'y a pas lieu de modifier les gains G et g.

L'échantillon central constituant la sortie du « limiteur doux » sera à multiplier par le gain g, que g ait été modifié ou non.

Les valeurs de Emin et Emax sont ajustées en fonction des caractéristiques du matériel, c'est-à-dire les valeurs à ne pas dépasser dans les traitements qui suivent.

Elles sont aussi choisies de telle sorte que, si la puissance moyenne du signal d'entrée est (statistiquement) constante, les modifications des gains g et G soient le moins fréquente possible.

Dans le cas d'une mise en oeuvre en "virgule fixe" (utilisant des nombres entiers), la valeur de n sera de préférence égale à 2, sachant qu'une multiplication ou une division par 2 se traduisent par un simple décalage à gauche ou à droite.

La figure 9 représente un exemple de dispositif d'estimation glissante de l'énergie du signal.

Son principe est similaire à la partie "estimation de puissance" du limiteur doux représenté à la figure 8, et s'applique au signal complexe « limité doux » ou « soft » issu du limiteur doux.

Après remise à zéro d'une ligne à retard à N points 201 et d'un accumulateur 202, le carré du module des échantillons de signal les plus anciens (203) est soustrait de l'accumulateur et celui des plus récents (204) est additionné.

Cette ligne à retard est dimensionnée de telle sorte qu'elle contienne à chaque instant l'intégralité des échantillons qui participent aux corrélations (cases Doppler).

Une variante simple (non figurée ici pour des raisons de simplification) consiste à stocker dans la ligne à retard les carrés des modules eux-mêmes et à additionner à l'accumulateur le carré de module entrant dans la ligne à retard et à soustraire le carré de module sortant. Ceci économise l'élément 203 par exemple.

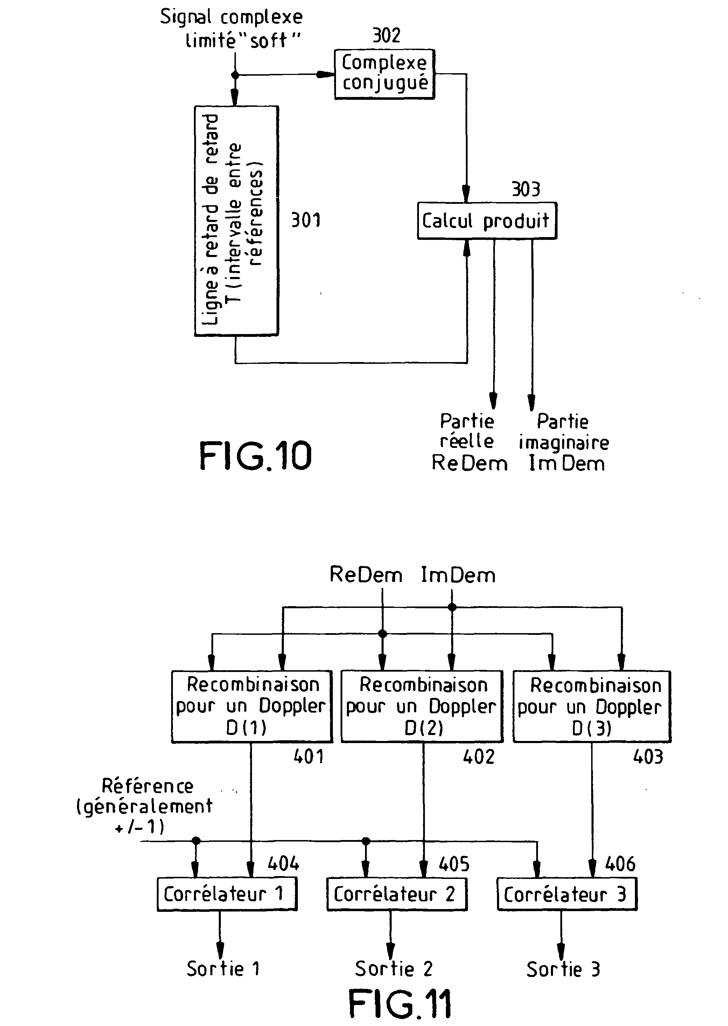

La figure 10 schématise un exemple de démodulateur différentiel.

Une ligne à retard 301 réalise un retard égal à l'écart temporel entre deux références successives. Un "conjugateur" 302 et un multiplieur complexe 303 se chargent de délivrer séparément la partie réelle (ReDem) et la partie imaginaire (ImDem) du signal démodulé différentiellement qui vont être recombinées avant corrélation avec un signal de référence R.

La figure 11 est un premier exemple détaillé d'un corrélateur à cases Doppler avec 3 cases Doppler.

Par exemple, pour 3 cases Doppler, celle du milieu étant centrée sur la fréquence nominale, un dispositif 401 calcule **comp**((ReDem + j ImDem) exp(+ j teta)), le dispositif 402 **comp**(ReDem + j ImDem) et le dispositif 403 **comp**((ReDem + j ImDem) exp(- j teta)) où :

- l'angle teta correspond à la rotation de phase entre deux symboles de référence pour la case Doppler considérée,
- **comp**(x) désigne une fonction dépendant du système, et donnant un nombre réel pouvant être selon le cas la partie réelle, la partie imaginaire, ou une autre fonction de la quantité x. Cette fonction est choisie pour que la corrélation puisse être obtenue par une suite de multiplications par +/-1.

Les corrélations sur les trois cases Doppler sont effectuées par des corrélateurs 404, 405 et 406 par exemple de la manière suivante :

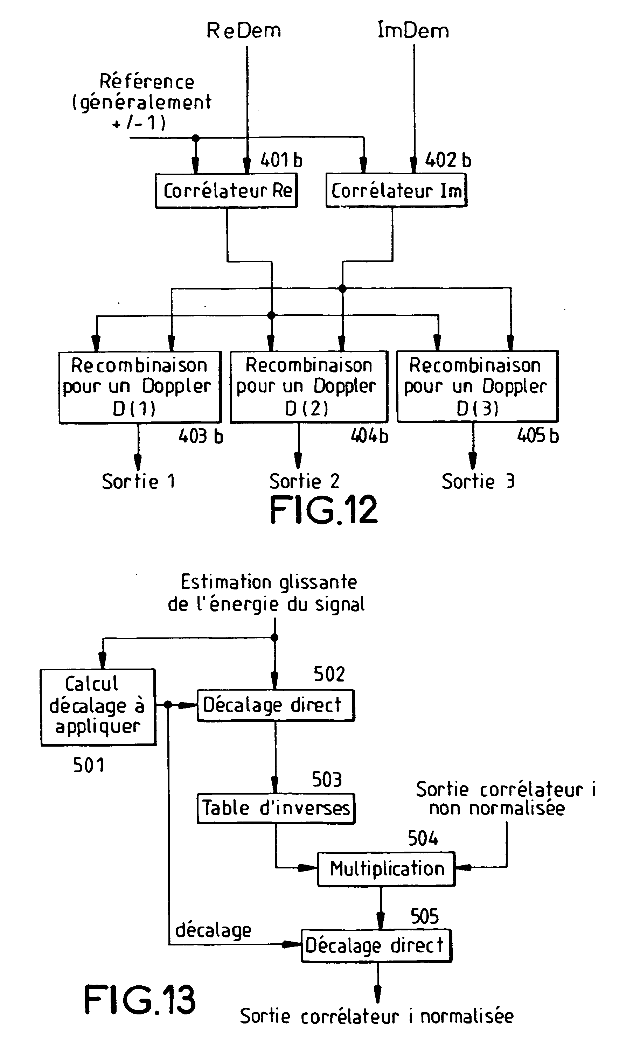

- si le nombre de case Doppler vaut 1, un seul corrélateur est nécessaire.
- s'il vaut 2, deux corrélateurs sont nécessaires.
- s'il est supérieur ou égal à 3, la variante ci-dessous (figure 12) montre comment on peut n'utiliser que deux corrélateurs dans tous les cas.

La figure 12 représente un deuxième exemple détaillé d'un corrélateur « à cases Doppler »

En effet, la corrélation étant une opération linéaire, il est possible de n'effectuer les corrélations que sur les signaux ReDem et ImDem au moyen des corrélateurs 401b et 402b, et de recombiner les sorties au moyen des dispositifs 403b, 404b et 405b (toujours dans le cas de trois cases doppler) qui effectuent des opérations similaires à celles des dispositifs 401, 402 et 403 précités.

La figure 13 décrit un exemple de dispositif permettant de normaliser la sortie des corrélateurs.

Les éléments 501 et 502 servent à trouver le décalage qui permet de transformer l'estimation glissante de l'énergie du signal participant à la corrélation en une adresse valide dans la table d'inverses 503.

La sortie non normalisée du i-ème corrélateur est multipliée dans un dispositif adapté 504 par la sortie de la table, et subit un décalage par le décaleur 505 qui permet de restituer la valeur (approchée) que l'on aurait obtenue par une vraie division, à savoir la sortie du i-ème corrélateur normalisée.

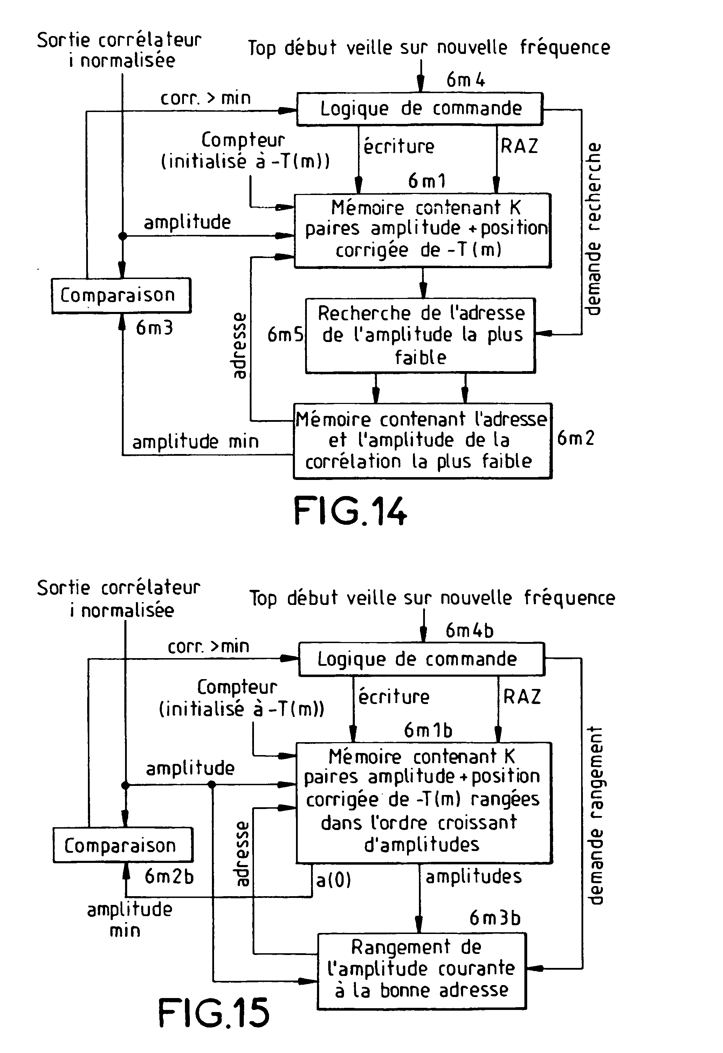

La figure 14 représente un exemple de dispositif permettant de mémoriser les K plus grandes valeurs sur F (m). On mémorise les couples (amplitudes et positions -T(m)).

Pour la fréquence de veille de rang m, la mémoire 6m1 contient les paires amplitude + position temporelle des K plus grandes corrélations apparues jusqu'alors. La mémoire 6m2 contient l'amplitude de la corrélation la plus faible contenue dans la mémoire 6m1, ainsi que son adresse dans cette mémoire.

Lorsqu'une nouvelle valeur de corrélation normalisée apparaît, on la compare grâce au comparateur 6m3 à la valeur minimale retenue jusque là :

- si elle est inférieure à la valeur minimale, rien ne se passe,
- si elle est supérieure à la valeur minimale, la nouvelle corrélation remplace l'ancienne plus petite (i.e. on la stocke ainsi que sa positon corrigée à son adresse) et un système 6m5 se charge de repérer parmi les K couples contenus dans la mémoire 6m1 celui dont l'amplitude est la plus faible, et d'en transférer l'adresse et l'amplitude dans la mémoire 6m2.

L'ensemble est sous le contrôle d'une logique de commande 6m4 qui se charge en outre d'initialiser le système au début de la recherche.

La figure 15 représente une variante de la figure 14.

Cette fois-ci, une mémoire 6m1b contient les paires (amplitude, position) systématiquement rangées dans l'ordre des amplitudes croissantes.

La valeur a(0) représente l'amplitude stockée à l'adresse 0, qui est la plus petite de toutes.

Si le comparateur 6m2b détecte que la sortie courante du corrélateur concerné est supérieure à a(0), le système 6m3b se charge de modifier le contenu de la mémoire 6m1b de telle sorte que la nouvelle amplitude soit rangée à la bonne place, étant entendu que l'amplitude a0 (et la position correspondante) aura été éliminée. Ces opérations sont effectuées sous le contrôle de la logique de commande 6m4b qui se charge entre autre des initialisations.

Dans cette deuxième façon de procéder, il n'y a en moyenne que (approximativement) K/2 comparaisons à effectuer pour affecter la bonne place à la nouvelle corrélation, au lieu de K (environ) dans la première. Mais, il faut ensuite, en moyenne, décaler d'une adresse vers le haut ou vers le bas les paires (amplitude, position) situées d'un côté ou de l'autre de la nouvelle corrélation.

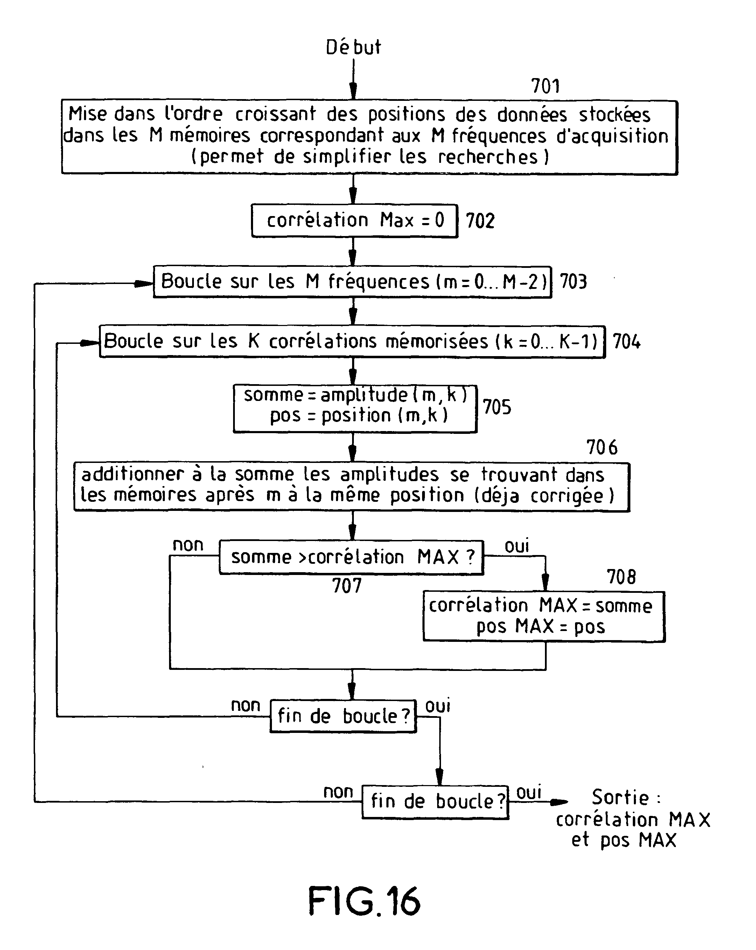

La figure 16 décrit un exemple de système de sommation finale des différentes « plus grandes valeurs retenues ».

Le système de sommation finale ci-dessous montre sous forme d'organigramme le procédé qui permet, à partir du contenu des mémoires du dispositif 600, de décider de l'absence ou de la présence des paliers de référence sur les M fréquences.

Au départ, par commodité, on réarrange (701) dans les mémoires et dans l'ordre croissant des positions les paires (amplitude, position). Ceci peut être fait très rapidement par des algorithmes de type "Quick-Sort" qui sont au rangement simple ("tri à bulles" ou "Bubble Sort") ce que la FFT (Fast Fourier Transform) est à la DFT (Discrete Fourier Transform) et qui sont connus de l'Homme du métier.

L'avantage est que, si l'on trouve dans la mémoire une adresse A correspondant à une valeur de position donnée, on est sûr que l'adresse où l'on trouvera une position supérieure sera à une adresse supérieure à A (la recherche commencera donc à l'adresse A + 1, au lieu de 0).

On initialise ensuite à zéro la valeur de la "corrélation MAX" (702).

Pour chaque fréquence (703) et pour toutes les positions mémorisées pour cette fréquence (704), on additionne les amplitudes correspondant à la même position à cette fréquence (étape 705) et dans les suivantes.

Si la somme obtenue est supérieure à la "corrélation MAX" (707), on identifie la "corrélation MAX" à la somme et la position du maximum ("pos MAX") à la position examinée (708).

La valeur de sortie finale est la valeur de "corrélation MAX", accompagnée de "pos MAX". C'est elle qui est comparée au seuil fixe dans le comparateur 800 pour décider si oui ou non le signal (les références) était présent et, si oui, à quelle position temporelle.

Dans les différentes variantes exposées ci-dessus, la mise en oeuvre matérielle peut être réalisée de la manière suivante :

- Pour faire une division par n, très coûteuse en puissance de calcul, on multipliera par exemple l'entier le plus proche de $2^k/n$ (pré-calculé et mis dans une table), et on divisera ensuite par $2^k$, ce qui se fait simplement par un décalage à droite de k positions,
- Les calculs sont effectués par exemple sur des nombres en « virgule fixe » (nombres entiers ou fractionnaires) et, moyennant certaines précautions, donnent toujours un résultat exact,
- Dans la mesure du possible, on privilégiera les multiplications ou les divisions par des puissances de 2 (décalages à gauche ou à droite) au détriment d'autres valeurs, ce qui évite de calculer les dites autres valeurs,
- La majorité des échantillons de sortie du ou des corrélateurs consiste en échantillons de « bruit » sans intérêt et ne participent en rien à la détection de présence. On cherchera donc à garder uniquement les échantillons de corrélation « dignes d'intérêt » afin d'économiser la mémoire.

**Revendications**

**1.** Procédé de détection et de synchronisation d'un signal dans un système à sauts de fréquence **caractérisé en ce qu'**il comporte au moins les étapes suivantes :

- pour chaque fréquence F(1)...F(M), sélectionner les K échantillons correspondant aux plus grandes valeurs du signal, et leurs positions,
- combiner (700) pour une position donnée, les M plus grandes valeurs sélectionnées sur chaque fréquence ayant la dite position, et conserver la plus grande valeur combinée et la position correspondante,
- comparer (800) la plus grande valeur combinée à une valeur seuil, et si elle est supérieure à cette valeur seuil, décréter la détection du signal.

**2.** Procédé selon la revendication 1 **caractérisé en ce qu'**il comporte au moins les étapes suivantes :

- limiter le niveau d'amplitude du signal reçu S,
- corréler le signal reçu avec un signal de référence R,
- pour chaque fréquence F(1)...F(M) mémoriser les K plus grandes valeurs du signal et leur position corrigée d'un retard connu T(1)...T(M),
- sommer pour une position temporelle donnée les K plus grandes valeurs sélectionnées ayant cette position et conserver la plus grande somme,
- comparer cette plus grande somme à une valeur seuil, et si elle est supérieure à cette valeur seuil, décréter la détection du signal.

3. Procédé selon la revendication 2 **caractérisé en ce que** l'étape de limitation du niveau de signal comporte au moins les étapes suivantes :

- utiliser une fenêtre glissante pour sélectionner une tranche (zone) de signal,
- estimer l'énergie du signal sur cette tranche,
- faire varier le gain appliqué au signal de telle sorte qu'in fine, son énergie à court terme reste pendant la majorité du temps dans un intervalle fixe donné.

4. Procédé selon la revendication 3 **caractérisé en ce que** l'on utilise une ligne à retard ou une mémoire circulaire comme fenêtre glissante.

5. Procédé selon l'une des revendications précédentes **caractérisé en ce que**, pour une fréquence de veille de rang m, connaissant les paires amplitudes et position des K plus grandes valeurs apparues,

- si la nouvelle valeur corrélée est supérieure à la valeur minimale retenue jusqu'alors,

  - on remplace l'ancienne valeur minimale par la nouvelle valeur corrélée,
  - on recherche parmi les K couples celui dont l'amplitude est la plus faible et
  - on mémorise ses paramètres (amplitude, position corrigée).

6. Procédé selon l'une des revendications 1 à 5 **caractérisé en ce que** l'on compare la nouvelle valeur corrélée aux différentes amplitudes mémorisées dans un ordre d'amplitude croissante, et dès que cette nouvelle valeur est supérieure à une des amplitudes, on range la nouvelle valeur corrélée ainsi que sa position corrigée .

7. Procédé selon l'une des revendications 1 à 6 **caractérisé en ce que** l'étape de combinaison comporte les étapes suivantes :

- initialiser à 0 une valeur « corrélation MAX »,
- pour chaque fréquence F(m) et pour toutes les positions mémorisées pour cette fréquence, additionner les amplitudes correspondant à la même position à cette fréquence et dans les suivantes,
- si la somme obtenue est supérieure à la valeur « corrélation MAX », identifier la valeur « corrélation MAX » à la somme et la position du maximum « pos MAX » à la position examinée,
- sélectionner la valeur finale comme étant la valeur de « corrélation MAX » accompagnée de « pos MAX », afin de déterminer la détection du signal.

8. Dispositif de détection et de synchronisation d'un signal dans un système à sauts de fréquence **caractérisé en ce qu'**il comporte au moins les éléments suivants :

- plusieurs dispositifs de mémorisation (6i0) où i est l'indice de la fréquence concernée, les dispositifs étant adaptés à mémoriser les K plus grandes valeurs pour une fréquence donnée ainsi que leur position,
- un dispositif de combinaison (700) permettant de combiner, position par position, les K plus grandes valeurs pour toutes les valeurs de fréquence et de conserver la plus grande valeur,
- un comparateur (800) recevant d'une part la valeur d'un seuil à respecter et d'autre part la plus grande valeur.

9. Dispositif selon la revendication 8 **caractérisé en ce que** le dispositif de combinaison est un sommateur.

10. Dispositif selon l'une des revendications 8 et 9 **caractérisé en ce qu'**il comporte un limiteur doux (100) adapté à contrôler le niveau du signal et un corrélateur (400) qui reçoit aussi un signal de référence R.

**Patentansprüche**

1. Verfahren zur Erfassung und zur Synchronisation eines Signals in einem System mit Frequenzsprüngen, **dadurch gekennzeichnet, dass** es mindestens die folgenden Schritte aufweist:

   - für jede Frequenz F(1) ... F(M) die K Tastproben, die den größten Werten des Signals entsprechen, und ihre Positionen auszuwählen,
   - die in jeder Frequenz mit dieser Position ausgewählten M größten Werte für eine gegebene Position zu kombinieren (700) und den größten kombinierten Wert und die entsprechende Position zurückzubehalten,
   - den größten kombinierten Wert mit einem Schwellwert zu vergleichen (800), und wenn er größer ist als dieser Schwellwert, die Erfassung des Signals zu beschließen.

2. Verfahren nach Anspruch 1, **dadurch gekennzeichnet, dass** es mindestens die folgenden Schritte aufweist:

   - Begrenzen des Amplitudenpegels des empfangenen Signals S,
   - Korrelieren des empfangenen Signals mit einem Bezugssignal R,
   - für jede Frequenz F(1) ... F(M), Speichern der K größten Werte des Signals und ihrer Position, korrigiert um eine bekannte Verzögerung T(1) ... T(M),
   - für eine gegebene zeitliche Position, Summieren der K größten ausgewählten Werte mit dieser Position und Zurückbehalten der größten Summe,
   - Vergleichen dieser größten Summe mit einem Schwellwert, und wenn sie größer ist als dieser Schwellwert, Beschließen der Erfassung des Signals.

3. Verfahren nach Anspruch 2, **dadurch gekennzeichnet, dass** der Schritt der Begrenzung des Signalpegels mindestens die folgenden Schritte aufweist:

   - Verwenden eines gleitenden Fensters, um einen Signalabschnitt (Zone) auszuwählen,
   - Schätzen der Energie des Signals in diesem Abschnitt,
   - Veränderung der an das Signal angelegten Verstärkung derart, dass am Ende seine kurzfristige Energie während des größten Teils der Zeit in einem gegebenen festen Bereich bleibt.

4. Verfahren nach Anspruch 3, **dadurch gekennzeichnet, dass** eine Verzögerungsleitung oder ein Ringspeicher als gleitendes Fenster verwendet wird.

5. Verfahren nach einem der vorhergehenden Ansprüche, **dadurch gekennzeichnet, dass** für eine Standby-Frequenz des Rangs m, in Kenntnis der Paare aus Amplitude und Position der K größten aufgetretenen Werte,

   - wenn der neue korrelierte Wert größer ist als der bis dahin zurückbehaltene minimale Wert,

     - der alte minimale Wert durch den neuen korrelierten Wert ersetzt wird,
     - unter den K Paaren dasjenige gesucht wird, dessen Amplitude am schwächsten ist, und
     - seine Parameter (Amplitude, korrigierte Position) gespeichert werden.

6. Verfahren nach einem der Ansprüche 1 bis 5, **dadurch gekennzeichnet, dass** der neue korrelierte Wert mit den verschiedenen gespeicherten Amplituden in einer ansteigenden Amplitudenreihenfolge verglichen wird, und sobald dieser neue Wert größer ist als eine der Amplituden, der neue korrelierte Wert sowie seine korrigierte Position eingeordnet werden.

7. Verfahren nach einem der Ansprüche 1 bis 6, **dadurch gekennzeichnet, dass** der Kombinationsschritt die folgenden Schritte aufweist:

   - Initialisieren eines Werts "MAX Korrelation" auf 0,
   - für jede Frequenz F(m) und für alle für diese Frequenz gespeicherten Positionen, Addieren der Amplituden entsprechend der gleichen Position auf dieser Frequenz und in den folgenden,
   - wenn die erhaltene Summe größer ist als der Wert "MAX Korrelation", Identifizieren des Werts "MAX Korrelation" mit der Summe und der Position des Maximums "MAX Pos" mit der untersuchten Position,
   - Auswählen des Endwerts als der Wert von "MAX Korrelation" begleitet von "MAX Pos", um die Erfassung des Signals zu bestimmen.

8. Vorrichtung zur Erfassung und zur Synchronisation eines Signals in einem System mit Frequenzsprüngen, **dadurch gekennzeichnet, dass** sie mindestens die folgenden Elemente aufweist:

- mehrere Speichervorrichtungen (6i0), wobei i der Index der betroffenen Frequenz ist, wobei die Vorrichtungen ausgelegt sind, um die K größten Werte für eine gegebene Frequenz sowie ihre Position zu speichern,
- eine Kombinationsvorrichtung (700), die es ermöglicht, Position für Position die K größten Werte für alle Frequenzwerte zu kombinieren und den größten Wert zurückzubehalten,
- einen Komparator (800), der einerseits den Wert einer einzuhaltenden Schwelle und andererseits den größten Wert empfängt.

9. Vorrichtung nach Anspruch 8, **dadurch gekennzeichnet, dass** die Kombinationsvorrichtung ein Summierer ist.

10. Vorrichtung nach einem der Ansprüche 8 und 9, **dadurch gekennzeichnet, dass** sie einen weichen Begrenzer (100), der ausgelegt ist, um den Pegel des Signals zu prüfen, und einen Korrelator (400) aufweist, der auch ein Bezugssignal R empfängt.


**Claims**

1. Method for the detection and synchronization of a signal in a frequency-hopping system, **characterized in that** it comprises at least the following steps:

- for each frequency F (1) ...F (M), selecting the K samples corresponding to the greatest values of the signal, and their positions,
- combining (700), for a given position, the M greatest values selected from each frequency having said position, and preserving the greatest combined value and the corresponding position,
- comparing (800) the greatest combined value with a threshold value, and if it is greater than this threshold value, then declaring the detection of the signal.

2. Method according to Claim 1, **characterized in that** it comprises at least the following steps:

- limiting the amplitude level of the received signal S,
- correlating the received signal with a reference signal R,
- for each frequency F(1) ... F(M), storing the K greatest values of the signal and their position corrected by a known delay T(1)...T(M),
- for a given temporal position, summing the K greatest selected values having this position and preserving the greatest sum,
- comparing this greatest sum with a threshold value, and if it is greater than this threshold value, then declaring the detection of the signal.

3. Method according to Claim 2, **characterized in that** the step for the limiting of the signal level comprises at least the following steps:

- using a sliding window to select a signal section (zone),
- estimating the energy of the signal on this section,
- bringing about a variation in the gain applied to the signal so that, ultimately, its short-term energy remains in a given fixed interval for the majority of the time.

4. Method according to Claim 3, **characterized in that** a delay line or a circular memory is used as sliding window.

5. Method according to one of the preceding claims, **characterized in that**, for an m-ranking frequency to be watched, the amplitude/position pairs of the K greatest values that have appeared being known,

- if the new correlated value is higher than the minimum value chosen hitherto,

    - the former minimum value is replaced by the new correlated value,
    - a search is made among the K pairs for the pair whose amplitude is the lowest, and
    - its parameters (amplitude and corrected position) are stored.

6.  Method according to one of Claims 1 to 5, **characterized in that** the correlated new value is compared with the different amplitudes stored in an order of rising amplitude, and as soon as this new value is higher than one of the amplitudes, the new correlated value as well as its corrected position are stored.

7.  Method according to one of Claims 1 to 6, **characterized in that** the combination step comprises the following steps:

    *   initializing a "MAX correlation" value to 0,
    *   for each frequency F(m) and for all the positions stored for this frequency, adding the amplitudes corresponding to the same position at this frequency and in the following ones,
    *   if the sum obtained is greater than the "MAX correlation" value, identifying the "MAX correlation" value with the sum and the position of the maximum "MAX pos" at the position examined,
    *   selecting the final value as being the value of "MAX correlation" accompanied by "MAX pos" so as to determine the detection of the signal.

8.  Device for the detection and synchronization of a signal in a frequency-hopping system, **characterized in that** it comprises at least the following elements:

    *   several storage devices (6i0), where i is the index of the frequency concerned, the devices being adapted to memorizing the K greatest values for a given frequency as well as their position,
    *   a combination device (700) enabling the position-by-position combining of the K greatest values for all the frequency values and the preserving of the greatest value,
    *   a comparator (800) receiving, firstly, the value of a threshold to be complied with and, secondly, the greatest value.

9.  Device according to Claim 8, **characterized in that** the combination device is a summator.

10. Device according to one of Claims 8 and 9, **characterized in that** it comprises a soft limiter (100) adapted to controlling the level of the signal and a correlator (400) that also receives a reference signal R.

**FIG.1**

**FIG.2**

Fréquence

Veille sur la fréquence d'un
palier de référence pour une
faible incertitude temporelle

F1

F0

Veille sur la fréquence d'un palier de référence
pour une incertitude temporelle plus importante

Temps

Motif de base    Motif de base

## FIG.3

Heure    Clef

Commande fréquence
de réception

Génération
pseudo-aléas

Train binaire définissant les
paliers de référence

Conversion en
signal attendu

Signal de sortie
du récepteur

Système de
régulation de
niveau

Corrélateur (sortie dépendant du
degré de ressemblance entre
signal reçu et signal attendu)

Sortie
corrélateur

Seuil fixe ou variable

Comparateur

Détection de présence

## FIG.4

FIG.5

FIG.6

FIG.7

Signal complexe d'entrée

**104**
Carré du module

RAZ

**101** Ligne à retard à P+1+P points

+
**102** Accumulateur
−

**103** Carré du module

**106** Décalage à droite ou à gauche

**105** Logique de calcul de décalage

Valeur de consigne

**FIG.8** Sortie signal complexe limité "soft"

Signal complexe limité "soft"

**204** Carré du module

RAZ

**201** Ligne à retard à N points

+
**202** Accumulateur
−

**203** Carré du module

**FIG.9** Energie du signal dans le corrélateur

Signal complexe
limité "soft"

302

Complexe
conjugué

Ligne à retard de retard
T (intervalle entre
références)

301

303

Calcul produit

Partie
réelle
ReDem

Partie
imaginaire
ImDem

# FIG.10

ReDem    ImDem

Recombinaison
pour un Doppler
D(1)

401

Recombinaison
pour un Doppler
D(2)

402

Recombinaison
pour un Doppler
D(3)

403

Référence
(généralement
+/–1)

404

Corrélateur 1

405

Corrélateur 2

406

Corrélateur 3

Sortie 1

Sortie 2

Sortie 3

# FIG.11

ReDem        ImDem

Référence
(généralement
+/-1)

401 b       402 b

| Corrélateur Re | Corrélateur Im |

| Recombinaison pour un Doppler D(1) | Recombinaison pour un Doppler D(2) | Recombinaison pour un Doppler D(3) |

403 b       404b       405 b

Sortie 1       Sortie 2       Sortie 3

# FIG.12

Estimation glissante
de l'énergie du signal

502

| Calcul décalage à appliquer | | Décalage direct |

501

503

| Table d'inverses |

Sortie corrélateur i
non normalisée

504

| Multiplication |

505

décalage

| Décalage direct |

# FIG.13

Sortie corrélateur i normalisée

Sortie corrélateur
i normalisée

Top début veille sur nouvelle fréquence

6m4

corr. > min

Logique de commande

écriture          RAZ

Compteur
(initialisé à -T(m))

6m1

amplitude

Mémoire contenant K
paires amplitude + position
corrigée de -T(m)

demande recherche

Comparaison

6m3

adresse

6m5

Recherche de l'adresse
de l'amplitude la plus
faible

amplitude min

Mémoire contenant l'adresse
et l'amplitude de la
corrélation la plus faible

6m2

## FIG.14

Sortie corrélateur
i normalisée

Top début veille sur nouvelle fréquence

6m4b

corr. >min

Logique de commande

écriture          RAZ

Compteur
(initialisé à -T(m))

6m1b

amplitude

Mémoire contenant K
paires amplitude + position
corrigée de -T(m) rangées
dans l'ordre croissant
d'amplitudes

demande rangement

Comparaison

6m2b

adresse

a(0)          amplitudes

amplitude
min

6m3b

Rangement de
l'amplitude courante
à la bonne adresse

## FIG.15

Début

701

Mise dans l'ordre croissant des positions des données stockées dans les M mémoires correspondant aux M fréquences d'acquisition (permet de simplifier les recherches)

corrélation Max = 0 | 702

Boucle sur les M fréquences (m = 0...M-2) | 703

Boucle sur les K corrélations mémorisées (k = 0...K-1) | 704

somme = amplitude (m, k) pos = position (m, k) | 705

706

additionner à la somme les amplitudes se trouvant dans les mémoires après m à la même position (déjà corrigée)

non    somme >corrélation MAX ?    oui

707

708

corrélation MAX = somme pos MAX = pos

non    fin de boucle ?    oui

non    fin de boucle ?    oui    Sortie : corrélation MAX et pos MAX

FIG.16